(19) **Europäisches Patentamt European Patent Office Office européen des brevets**

(11) **EP 3 726 164 B1**

(12) **EUROPEAN PATENT SPECIFICATION**

(45) Date of publication and mention
of the grant of the patent:
**05.07.2023 Bulletin 2023/27**

(51) International Patent Classification (IPC):
**F25B 41/24** (2021.01) **F25B 49/02** (2006.01)
**F25B 40/00** (2006.01) **F25B 13/00** (2006.01)
**F25B 40/02** (2006.01) **F25B 41/20** (2021.01)

(21) Application number: **19744088.6**

(22) Date of filing: **25.01.2019**

(52) Cooperative Patent Classification (CPC):
**F25B 40/02; F25B 13/00; F25B 41/24; F25B 49/02;**
F25B 2400/13; F25B 2600/2501; F25B 2600/2509;
F25B 2600/2513

(86) International application number:
**PCT/KR2019/001131**

(87) International publication number:
**WO 2019/147086 (01.08.2019 Gazette 2019/31)**

(54) **AIR CONDITIONER AND METHOD FOR CONTROLLING AIR CONDITIONER**

KLIMAANLAGE UND VERFAHREN ZUR STEUERUNG EINER KLIMAANLAGE

CLIMATISEUR ET PROCÉDÉ DE COMMANDE DE CLIMATISEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.01.2018 KR 20180009831**

(43) Date of publication of application:
**21.10.2020 Bulletin 2020/43**

(73) Proprietors:
• **Samsung Electronics Co., Ltd.
Gyeonggi-do 16677 (KR)**
• **Korea University Research and Business
Foundation
Seoul 02841 (KR)**

(72) Inventors:
• **JANG, Yong Hee
Suwon-si Gyeonggi-do 16677 (KR)**
• **MYEONG, Seong Ryeol
Suwon-si Gyeonggi-do 16677 (KR)**
• **LIM, Byoung Guk
Suwon-si Gyeonggi-do 16677 (KR)**

• **JUNG, Dong-Il
Suwon-si Gyeonggi-do 16677 (KR)**
• **SEO, Hyeong Joon
Suwon-si Gyeonggi-do 16677 (KR)**
• **JUN, Hong Seok
Suwon-si Gyeonggi-do 16677 (KR)**
• **KIM, Dong Woo
Seoul 02841 (KR)**
• **KIM, Yong Chan
Seoul 02841 (KR)**
• **LEE, Dong Chan
Seoul 02841 (KR)**

(74) Representative: **Gulde & Partner
Patent- und Rechtsanwaltskanzlei mbB
Wallstraße 58/59
10179 Berlin (DE)**

(56) References cited:
**EP-A1- 3 002 532          GB-A- 2 547 144
JP-A- 2016 075 402        KR-A- 20090 069 913
KR-A- 20140 064 625      KR-B1- 101 233 865
KR-B1- 101 321 548        US-A1- 2010 205 988
US-A1- 2014 026 605**

# Description

[Technical Field]

The present invention relates to an air conditioner in which a refrigerant is circulated in an injection type and a method of controlling the same.

[Background Art]

An air conditioner includes an outdoor unit to perform heat exchange between outdoor air and a refrigerant and an indoor unit to perform the heat exchange between indoor air and the refrigerant. The air conditioner is an apparatus that cools or heats the indoor air using movement of heat generated during evaporation and condensation of the refrigerant that circulates in a heat pump cycle including compression, condensation, decompression, and evaporation.

When using the heat pump cycle, since the heat exchange is performed between the outdoor air and the refrigerant, the heating performance decreases as an outside temperature decreases.

In recent times, in order to improve the heating performance of the air conditioner, an injection type in which a part of the refrigerant passing through a condenser is injected into a compressor to increase flow rate of the refrigerant has been introduced.

EP 3 002 532 A1 discloses an air conditioner in which the opening degree of the injection valve is increased or decreased if a discharge superheat satisfies a predetermined relationship. GB 2 547 144 A discloses an air conditioner in which the injection flow ration has a relationship to the discharge temperature and discharge superheat.

[Disclosure]

[Technical Problem]

The present invention, as defined by appended independent claims 1 and 9, provides an air conditioner and an associated method capable of increasing efficiency of the air conditioner by increasing an amount of a refrigerant flowing through an injection valve and preventing deterioration of the refrigerant and damage to a compressor due to an increase in a temperature inside the compressor.

[Technical Solution]

The present invention, as defined by appended independent claim 1, provides an air conditioner including: a compressor configured to compress a refrigerant; an indoor heat exchanger configured to convert a gaseous refrigerant into a liquid refrigerant in a heating mode; an outdoor heat exchanger configured to convert the liquid refrigerant into the gaseous refrigerant in the heating mode; a main pipe configured to connect the indoor heat exchanger and the outdoor heat exchanger; an injection pipe branched from the main pipe and configured to connect to an injection port of the compressor; a main valve installed on the main pipe and configured to control flow rate of the refrigerant flowing into the main pipe; an injection valve installed on the injection pipe and configured to control the flow rate of the refrigerant flowing into the injection pipe; and a controller configured to calculate an injection ratio based on a degree of opening of the injection valve and the main valve, and to control the degree of opening of the injection valve when the calculated injection ratio is not included in a preset range. Further, the controller is configured to control the degree of opening of the injection valve based on a relationship between the injection ratio and dryness of the refrigerant flowing through the injection port into the compressor.

.

The controller may be configured to control the degree of opening of the injection valve so that the injection ratio is included in the preset range.

The controller may be configured to reduce the degree of opening of the injection valve when the injection ratio is not included in the preset range.

The preset range cannot exceed a limit value. The limit value may include a range of 0.35 to 0.45.

The controller may be configured to calculate an opening ratio of the injection valve and the main valve based on the degree of opening of the injection valve and the main valve.

The controller may be configured to calculate the opening ratio of the injection valve and the main valve based on a maximum value of an opening degree of the main valve and the injection valve, a length of an inner diameter, and an initial value of the opening degree at which the a flow occurs in the main valve and the injection valve.

The controller may be configured to calculate the injection ratio based on the opening ratio of the injection valve and the main valve.

Furthermore, the present invention, as defined by appended independent claim 9, provides a method of controlling an air conditioner including a compressor, an indoor heat exchanger, and an outdoor heat exchanger, the method including: calculating an injection ratio based on a degree of opening of a main valve installed on a main pipe and controlling flow rate of a refrigerant flowing into the main pipe and a degree of opening of an injection valve installed on an injection pipe and controlling the flow rate of the refrigerant flowing into the injection pipe; and controlling the degree of opening of the injection valve when the calculated injection ratio is not included in a preset range. The controlling of the degree of opening of the injection valve includes controlling the degree of opening of the injection valve based on a relationship between the injection ratio and dryness of the refrigerant flowing through the injection port into the compressor.

The controlling of the degree of opening of the injection valve may include controlling the degree of opening of the injection valve so that the injection ratio is included in the preset range.

The controlling of the degree of opening of the injection valve may include reducing the degree of opening of the injection valve when the injection ratio is not included in the preset range.

The preset range cannot exceed a limit value. The limit value may include a range of 0.35 to 0.45.

The controlling of the degree of opening of the injection valve may include calculating an opening ratio of the injection valve and the main valve based on the degree of opening of the injection valve and the main valve.

The calculating of the injection ratio may include calculating the injection ratio based on the opening ratio of the injection valve and the main valve.

[Advantageous Effects]

According to the air conditioner and the method of controlling the air conditioner according to the invention, as defined by appended independent claims, there is an effect of increasing an efficiency of the air conditioner by increasing an opening degree of the injection valve as much as possible within a range where there is no risk of damage to the compressor.

[Description of Drawings]

FIG. 1 is a view schematically illustrating a heating cycle in an injection-type air conditioner.
FIG. 2 is a graph illustrating a heating capacity and a heating load of a general air conditioner without applying an injection type.
FIG. 3 is an abstract view embodying a configuration of an outdoor unit and an indoor unit in an air conditioner according to an embodiment.
FIG. 4 is a control block diagram of an air conditioner according to an embodiment.
FIG. 5 is a view illustrating a flow of a refrigerant when an air conditioner operates in a cooling mode according to an embodiment.
FIG. 6 is a view illustrating a flow of a refrigerant when an air conditioner operates in a heating mode according to an embodiment.
FIG. 7 is a graph illustrating a PH diagram (refrigerant diagram) representing a relationship between enthalpy and pressure.
FIG. 8 is a view illustrating a constant dryness line in a PH diagram.
FIG. 9 is a graph illustrating a circulation process of a refrigerant in a PH diagram in an injection-type air conditioner for injecting a gaseous refrigerant.
FIG. 10 is a graph illustrating a circulation process of a refrigerant in a PH diagram in an air conditioner of a two-phase injection type in which a liquid refrigerant and a gaseous refrigerant are mixed.
FIGS. 11 and 12 are views illustrating a relationship between vibration of a compressor and an injection ratio according to dryness of a refrigerant.
FIG. 13 is a graph illustrating a relationship between an injection ratio and an opening ratio of an electronic expansion valve.
FIG. 14 is a view illustrating equations and specific values required to calculate an injection ratio.
FIG. 15 is a flowchart illustrating a method of controlling an air conditioner according to an embodiment. embodiment, where step S130 further comprises basing the injection ratio on a correlation between the injection ratio and the dryness of the injected refrigerant.

[Modes of the Invention]

Like reference numerals refer to like elements throughout the specification. Not all elements of embodiments of the disclosure will be described, and description of what are commonly known in the art or what overlap each other in the embodiments will be omitted. The terms as used throughout the specification, such as "- part," "- module," "- member," "- block," etc., may be implemented in software and/or hardware, and a plurality of "~ parts," "~ modules," "~ members," or "~ blocks" may be implemented in a single element, or a single "- part," "- module," "~ member," or "- block" may include a plurality of elements.

It will be understood that when an element is referred to as being "connected" to another element, it can be directly or indirectly connected to the other element, wherein the indirect connection includes "connection" via a wireless communication network.

Also, when a part "includes" or "comprises" an element, unless there is a particular description contrary thereto, the part may further include other elements, not excluding the other elements.

As used herein, the singular forms "a," "an" and "the" are intended to include the plural forms as well, unless the context clearly indicates otherwise.

An identification code is used for the convenience of the description but is not intended to illustrate the order of each step. Each of the steps may be implemented in an order different from the illustrated order unless the context clearly indicates otherwise.

Hereinafter, the operation principles and embodiments of an air conditioner and a method of controlling the same will be described with reference to the accompanying drawings.

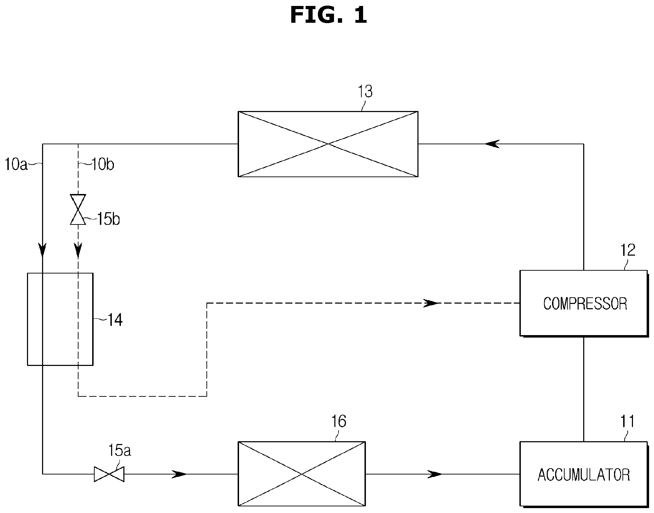

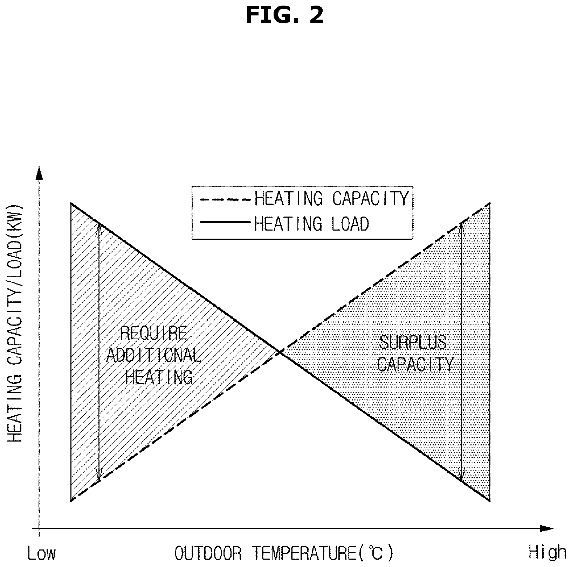

FIG. 1 is a view schematically illustrating a heating cycle in an injection-type air conditioner, and FIG. 2 is a graph illustrating a heating capacity and a heating load of a general air conditioner without applying an injection type.

According to an injection-type air conditioner 10 illustrated in FIG. 1, a refrigerant supplied from an accumulator 11 is injected into a compressor 12. The compressor 12 is provided to compress a low-temperature low-pressure gaseous refrigerant, and is configured to discharge a high-temperature high-pressure gaseous refrigerant.

The discharged gaseous refrigerant may flow into an indoor heat exchanger 13 installed in a room. The indoor heat exchanger 13 may serve as a condenser for condensing the high-temperature high-pressure gaseous refrigerant into a liquid refrigerant having a high pressure below a condensation temperature, and may perform heat exchange with peripheral air in response to a change in refrigerant enthalpy. In a heating cycle, the indoor heat exchanger 13 may release heat while condensing the gaseous refrigerant into a liquid phase, so that indoor air may be heated.

When the refrigerant flows through a main pipe 10a, the low-temperature high-pressure liquid refrigerant that has passed through the indoor heat exchanger 13 may expand and be decompressed in a main valve 15a.

On the other hand, when a phase change such as condensation or evaporation occurs by the heat exchange in the heat exchanger, a part of the introduced refrigerant may remain without phase conversion. For example, when the gaseous refrigerant is converted into the liquid refrigerant by the heat exchange in the indoor heat exchanger 13, some of the gaseous refrigerant may remain in a gaseous state. Therefore, the refrigerant discharged from the indoor heat exchanger 13 may be in a state in which the liquid refrigerant and the gaseous refrigerant are mixed.

In addition, some phase conversion may occur even when the liquid refrigerant expands. For example, when the liquid refrigerant passes through the main valve 15a, some of the refrigerant may undergo phase conversion into the gaseous refrigerant.

The low-temperature low-pressure liquid refrigerant which has passed through the main valve 15a may be injected into an outdoor heat exchanger 16 which is installed outdoors. The outdoor heat exchanger 16 may serve as an evaporator for evaporating a two-phase refrigerant of the low-temperature low-pressure into the gaseous refrigerant.

The gaseous refrigerant that has passed through the outdoor heat exchanger 16 may be injected back into the accumulator 11. The accumulator 11 may filter out the refrigerant remaining in the liquid phase without phase conversion among the injected refrigerant.

The previous paragraphs highlight the structure of the heating cycle of the injection-type air conditioner. It is to be understood that during its operation, the corresponding method steps previously introduced as optional, by the wording "may", are actually taking place.

As described above, since the outdoor heat exchanger 16 converts the liquid refrigerant into the gaseous refrigerant, energy must be supplied from outdoor air. Therefore, as illustrated in FIG. 2 due to characteristics of the outdoor heat exchanger 16 installed outdoors, as an outdoor temperature decreases, a heating capacity decreases and a heating load increases, resulting in a decrease in heating performance. Conversely, as the outdoor temperature increases, the heating capacity increases and the heating load decreases, resulting in surplus capacity.

Therefore, in order to improve the heating performance in the injection-type air conditioner 10, by branching the main pipe 10a at an outlet of the indoor heat exchanger 13 to form an injection pipe 10b, a part of the refrigerant that has passed through the indoor heat exchanger 13 is supplied to the compressor 12.

When an injection valve 15b is opened, the refrigerant that has passed through the indoor heat exchanger 13 may be introduced into the injection pipe 10b, and the liquid refrigerant flowing through the injection pipe 10b may expand in the injection valve 15b, the pressure and temperature are lowered, and heat exchanges while passing through an auxiliary heat exchanger 14.

In a vapor injection type, only the gaseous refrigerant may be supplied to the compressor 12, and in a two-phase injection type, the refrigerant in the mixed state of the liquid refrigerant and the gaseous refrigerant may be supplied to the compressor 12.

The air conditioner according to the embodiment may adopt the two-phase injection type to further increase heating efficiency by increasing the amount of the refrigerant supplied to the compressor 12. However, the adoption of the two-phase injection type does not always mean that only two-phase injection is performed. Depending on the operating environment of the air conditioner, it may mean that it can operate in a normal mode without opening an injection flow path, or it can operate in a gaseous injection mode that supplies only the gaseous refrigerant, or it can operate in a two-phase injection mode that supplies all of the gaseous refrigerant and the liquid refrigerant.

As before, the above paragraphs highlight the structure of the air conditioner. It is to be understood that during its operation, the corresponding method steps previously introduced as optional, by the wording "may", are actually taking place.

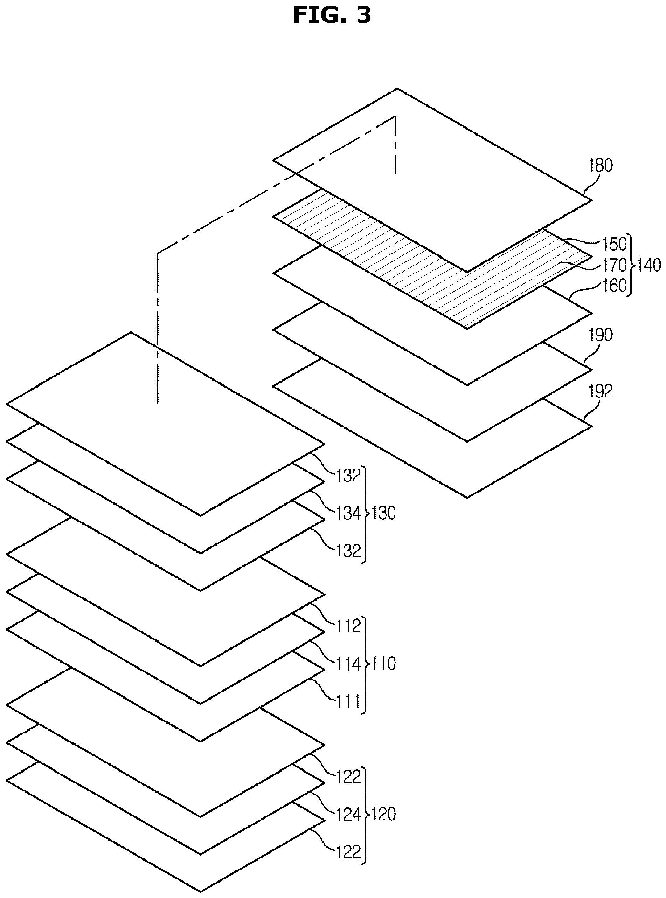

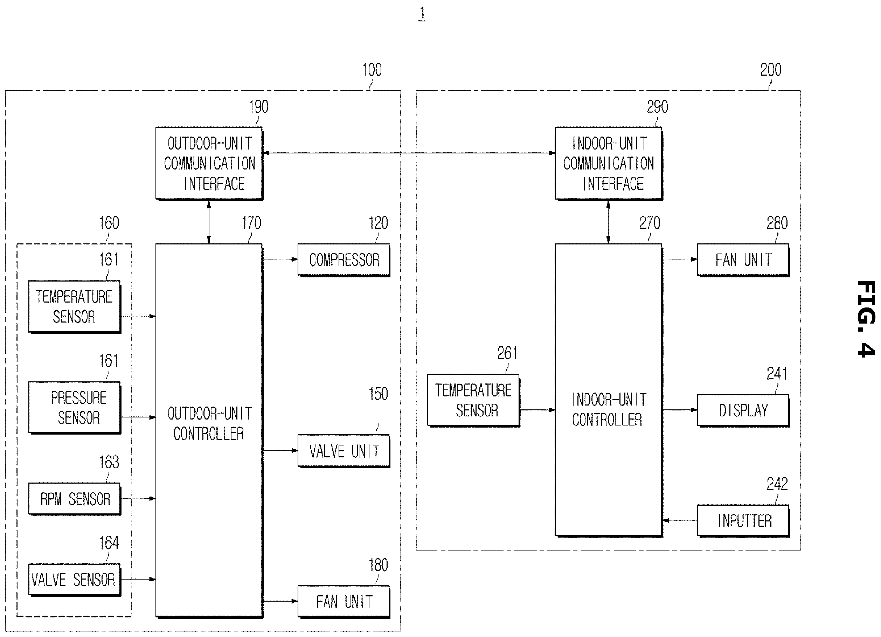

FIG. 3 is a view embodying a configuration of an outdoor unit and an indoor unit in an air conditioner according to an embodiment, and FIG. 4 is a control block diagram of an air conditioner according to an embodiment.

The air conditioner according to the embodiment is an apparatus capable of heating or heating and cooling. In the embodiments described below, the air conditioner capable of performing both heating and cooling will be described as an example.

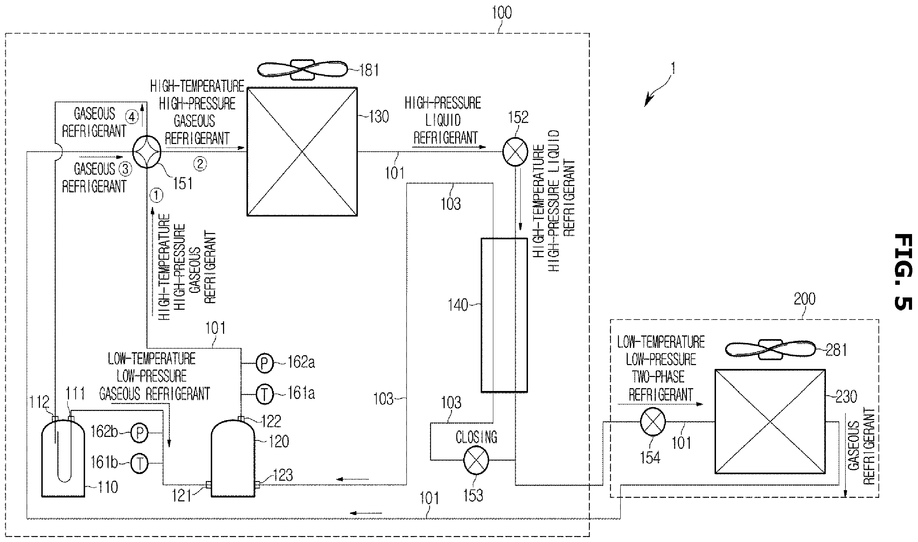

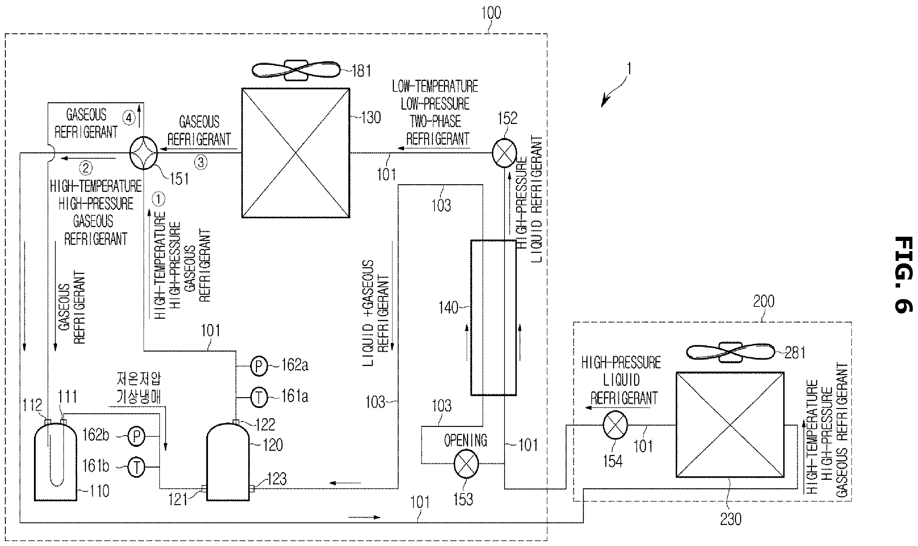

Referring to FIG. 3, and with further reference to Figures 5 and 6, an air conditioner 1 includes an outdoor unit 100 to perform the heat exchange between the outdoor air and the refrigerant and an indoor unit 200 to perform the heat exchange between the indoor air and the refrigerant.

The outdoor unit 100 and the indoor unit 200 are coupled to each other through a refrigerant pipe, resulting in formation of a cycle. In addition, a flow of the refrigerant between the components constituting the outdoor unit 100 and the flow of the refrigerant between the components constituting the indoor unit 200 may also be made through the refrigerant piping.

As the refrigerant that exchanges heat with the indoor air or the outdoor air, an HFC-based refrigerant may be used, and for example, an R32 refrigerant or a mixed refrigerant including the R32 refrigerant may be used.

A compressor 120 is configured to compress the low-temperature low-pressure refrigerant sucked through a suction port 121 to a high-temperature high-pressure refrigerant, and is configured to discharge the high-temperature high-pressure refrigerant through a discharge port 122.

For example, the compressor 120 may be implemented as a rotary compressor or a scroll compressor. However, the example of the compressor 120 is not limited thereto.

The discharge port 122 of the compressor 120 and the other end of the pipe connected to one end may be connected to a flow passage switching valve 151. For example, the flow passage switching valve 151 may be implemented as a 4-way valve, and may switch the flow of the refrigerant discharged from the compressor 120 according to an operation mode (cooling mode or heating mode), thereby forming a refrigerant flow path required for operation in the corresponding mode.

The flow passage switching valve 151 may include a first port 151a connected to the discharge port 122 of the compressor 120, a second port 151b connected to an indoor heat exchanger 230, a third port 151c connected to an outdoor heat exchanger 130, and a fourth port 151d connected to an accumulator 110.

During the cooling mode, the outdoor heat exchanger 130 may operate as the condenser for condensing the high-temperature high-pressure gaseous refrigerant into the high-pressure liquid refrigerant below a condensation temperature. During the heating mode, the outdoor heat exchanger 130 may operate as the evaporator for evaporating the low-temperature low-pressure liquid refrigerant into the gaseous refrigerant.

The outdoor heat exchanger 130 may perform the heat exchange between the refrigerant and the outside air in response to the change in the refrigerant enthalpy, and may include an outdoor fan 181 configured to increase the heat exchange efficiency between the refrigerant and the outdoor air.

A main valve 152 may be installed between the outdoor heat exchanger 130 and the indoor heat exchanger 230. The main valve 152 may be implemented as an electronic expansion valve configured to adjust a degree of opening thereof. The main valve 152 may expand the refrigerant, may adjust flow rate of the refrigerant, and may prevent the flow of the refrigerant.

In addition, the accumulator 110 may be provided between the fourth port 151d of the flow passage switching valve 151 and the compressor 120. The accumulator 110 may filter the refrigerant remaining in the liquid phase and fail to phase change among the refrigerants flowing into the compressor 120 from the flow passage switching valve 151 and supply oil to the compressor 120.

In addition, an oil separator for separating the oil may be provided between the compressor 120 and the first port 151a of the flow passage switching valve 151, and it is also possible to separate the oil from the refrigerant discharged from the compressor 120.

The indoor unit 200 may be an apparatus for cooling/heating the indoor air of the indoor space through the heat exchange between the refrigerant and the air. The indoor unit 200 may include the indoor heat exchanger 230 and an indoor fan 281. If necessary, two or more of the indoor heat exchangers 230 and the indoor fans 281 may also be installed.

During the cooling mode, the indoor heat exchanger 230 may operate as the evaporator for evaporating the low-temperature low-pressure liquid refrigerant into the gaseous refrigerant. During the heating mode, the indoor heat exchanger 230 may operate as the condenser for condensing the high-temperature high-pressure gaseous refrigerant into the high-pressure liquid refrigerant below a condensation temperature.

The indoor fan 281 may be installed adjacent to the indoor heat exchanger 230, and may circulate the indoor air, such that the indoor fan 281 may increase the efficiency of the heat exchange between the refrigerant circulating in the indoor heat exchanger 230 and the indoor air.

In addition, the indoor unit 200 may include an indoor unit valve 154 configured to control the flow of the refrigerant. The indoor unit valve 154 may be implemented as the electronic expansion valve configured to adjust the degree of opening thereof. The indoor unit valve 154 may expand the refrigerant, may adjust the flow rate of the refrigerant, and may prevent the flow of the refrigerant.

Meanwhile, a main pipe 101 connecting the indoor heat exchanger 230 and the outdoor heat exchanger 130 may be branched to form an injection pipe 103. The injection pipe 103 may be branched from the main pipe 101 and connected to an injection port 123 of the compressor 120 through an auxiliary heat exchanger 140.

The injection pipe 103 may be provided with an injection valve 153 that controls the flow rate of the refrigerant flowing through the injection pipe 103, and the injection valve 153 may be implemented as an electric valve capable of controlling the flow rate. For example, the injection valve 153 may be implemented as the electronic expansion valve.

The auxiliary heat exchanger 140 may perform the heat exchange between the refrigerants, and may secure a supercooling degree of the high pressure refrigerant when operating in the cooling mode, and may adjust dryness of the refrigerant flowing into the injection port 123 of the compressor 120 when operating in the injection mode. For example, the auxiliary heat exchanger 140 may be implemented as a double tube heat exchanger.

The structural aspects described as optional, by the wording "may", in the above paragraphs are actually realized in the embodiment shown by Figures 5 and 6, and are required by any embodiment of the present invention to the extend as defined by appended independent claim 1.

Hereinafter, control-related contents of the air conditioner 1 will be described with reference to FIG. 4.

Referring to FIG. 4, the outdoor unit 100 of the air conditioner 1 may include an outdoor-unit controller 170 that controls the compressor 120, a valve unit 150, a fan unit 180, sensors 160 that measure a temperature and pressure of the refrigerant or peripheral air, and an outdoor-unit communication interface 190 that communicates with the indoor unit 200.

The valve unit 150 may include the flow passage switching valve 151, the main valve 152, and the injection valve 153, and the fan unit 180 may include the outdoor fan 181.

The sensors 160 may include a temperature sensor 161, a pressure sensor 162, and an RPM sensor 163. The sensors 160 may measure the temperature, pressure, and a number of revolutions, which will be described later, according to a predetermined period, and may measure in real time, or may measure when a specific event occurs. Also, the predetermined measurement period may be changed.

The temperature sensor 161 may include a discharge temperature sensor 161a and a suction temperature sensor 161b, and the pressure sensor 162 may include a discharge pressure sensor 162a and a suction pressure sensor 162b.

The discharge temperature sensor 161a may be installed on the discharge port 122 side of the compressor 120 to measure the temperature of the refrigerant discharged from the compressor 120. The suction temperature sensor 161b may be installed on the suction port 121 side of the compressor 120 to measure the temperature of the refrigerant sucked into the compressor 120.

The discharge pressure sensor 162a may be installed on the discharge port 122 side of the compressor 120 to measure the pressure of the refrigerant discharged from the compressor 120. The suction pressure sensor 162b may be installed on the suction port 121 side of the compressor 120 to measure the pressure of the refrigerant sucked into the compressor 120.

In addition, the temperature sensor 161 may further include an outdoor temperature sensor that measures an outdoor temperature and an indoor temperature sensor that measures an indoor temperature.

The RPM sensor 163 may measure the number of revolutions of the compressor 120.

A valve sensor 164 may measure the degree of opening of the valve unit 150. Particularly, the valve sensor 164 may measure the degree of opening of the flow passage switching valve 151, the main valve 152, and the injection valve 153.

The outdoor-unit controller 170 may include at least one memory in which a program for controlling the overall operation of the outdoor unit 100 is stored, and at least one processor for executing the stored program.

The outdoor-unit controller 170 may control the compressor 120, the valve unit 150, and the fan unit 180 based on commands transmitted from the outdoor-unit communication interface 190.

The indoor unit 200 may include a fan unit 280, a display 241, an inputter 242, a temperature sensor 261, an indoor-unit communication interface 290, and an indoor-unit controller 270.

The fan unit 280 may include the indoor fan 281 installed adjacent to the indoor heat exchanger 230 as described above.

The display 241 may be implemented as a display device such as an LCD, LED, and OLED, and may display information about the air conditioner 1. For example, the display 241 may display information about a current state of the air conditioner 1 (current operating mode, set temperature or humidity, etc.) or environmental information (current indoor temperature or indoor humidity), and may display a screen for guiding a user input.

For example, the screen for guiding the user input may include a screen for receiving the operation mode of the air conditioner 1 as one of the heating mode and the cooling mode, and a screen for receiving a target temperature or humidity of the air conditioner 1.

The inputter 242 may be implemented with a button, a touch pad, or the like provided on a main body of the indoor unit 200, or may further include a remote controller spaced apart from the main body of the indoor unit 200.

The inputter 242 may include a power button for turning on/off power of the air conditioner 1, an operation selection button for selecting the operation mode, a wind direction button for selecting a direction of airflow, an air volume button for selecting an intensity of airflow, temperature buttons for setting the temperature, and the like.

The temperature sensor 261 may measure the temperature of the indoor air or the temperature of the indoor heat exchanger 230.

The indoor-unit communication interface 290 may communicate with the outdoor-unit communication interface 190 to exchange necessary information with each other.

The indoor-unit controller 270 may include at least one memory storing a program for controlling the overall operation of the indoor unit 200 and at least one processor executing the stored program.

The indoor-unit controller 270 may control the fan unit 280, the display 241, or the indoor-unit communication interface 290 based on a user command input through the inputter 242, the temperature measured by the temperature sensor 261, or the information received from the outdoor-unit communication interface 190 by the indoor-unit communication interface 290.

In addition, the air conditioner 1 may include a controller, and the controller may include the outdoor-unit controller 170 and the indoor-unit controller 270 described above.

FIG. 5 is a view illustrating a flow of a refrigerant when an air conditioner operates in a cooling mode according to an embodiment, and FIG. 6 is a view illustrating a flow of a refrigerant when an air conditioner operates in a heating mode according to an embodiment. Arrows illustrated in FIGS. 5 and 6 respectively indicate the flow of the refrigerant.

When the user selects the cooling mode through the inputter 242, the indoor-unit controller 270 and the outdoor-unit controller 170 may operate the indoor unit 200 and the outdoor unit 100 in the cooling mode, respectively.

When operating in the cooling mode, the outdoor-unit controller 170 may control the flow passage switching valve 151 to form the refrigerant flow path through which the first port 151a and the third port 151c are connected, and the second port 151b and the fourth port 151d are connected.

Referring to FIG. 5, the high-temperature high-pressure gaseous refrigerant discharged from the discharge port 122 of the compressor 120 may flow into the first port 151a of the flow passage switching valve 151 (①), and may be discharged through the third port 151c (②) and flow into the outdoor heat exchanger 130.

The outdoor heat exchanger 130 may condense the high-temperature high-pressure gaseous refrigerant into the high-pressure liquid refrigerant below the condensation temperature, and may perform the heat exchange between the refrigerant and the outdoor air. The high-pressure liquid refrigerant below the condensation temperature discharged from the outdoor heat exchanger 130 may be converted to a high-temperature high-pressure liquid refrigerant while passing through the main valve 152, and then expanded while passing through the indoor unit valve 154 to be the low-temperature low-pressure liquid refrigerant.

The low-temperature low-pressure liquid refrigerant may flow into the indoor heat exchanger 230, and the indoor heat exchanger 230 may evaporate the introduced liquid refrigerant into the gaseous refrigerant and perform the heat exchange with the indoor air.

The gaseous refrigerant discharged from the indoor heat exchanger 230 may flow into the second port 151b of the flow passage switching valve 151 (③), and the introduced gaseous refrigerant may flow into an inlet 112 of the accumulator 110 through the fourth port 151d (④).

The accumulator 110 may filter the liquid contained in the introduced refrigerant and discharge the low-temperature low-pressure gaseous refrigerant with the oil through an outlet 111 to supply it to the compressor 120.

The refrigerant supplied to the compressor 120 may be compressed and discharged at the high-temperature high-pressure from the compressor 120. The air conditioner 1 may operate in the cooling mode through the circulation cycle in which the discharged refrigerant is supplied to the compressor 120 again through the above-described process.

When the user selects the heating mode through the inputter 242, the indoor-unit controller 270 and the outdoor-unit controller 170 may operate the indoor unit 200 and the outdoor unit 100 in the heating mode, respectively.

When operating in the cooling mode, the outdoor-unit controller 170 may control the flow passage switching valve 151 to form the refrigerant flow path through which the first port 151a and the second port 151b are connected, and the third port 151c and the fourth port 151d are connected.

The method steps previously introduced as optional, by the wording "may", are realized if the air conditioner is operated according to the cooling mode.

Referring to FIG. 6, the high-temperature high-pressure gaseous refrigerant discharged from the discharge port 122 of the compressor 120 may flow into the first port 151a of the flow passage switching valve 151 (①), and may be discharged through the second port 151b (②) and flow into the outdoor heat exchanger 130.

The indoor heat exchanger 230 may condense the high-temperature high-pressure gaseous refrigerant into the high-pressure liquid refrigerant below the condensation temperature, and may perform the heat exchange between the refrigerant and the indoor air. The high-pressure liquid refrigerant below the condensation temperature passing through the indoor unit valve 154 may move to the auxiliary heat exchanger 140.

The method steps previously introduced as optional, by the wording "may", are realized if the air conditioner is actually operated according to the heating mode.

The heating mode may be divided into a normal mode and the injection mode. For example, when the outdoor temperature is below a preset reference temperature, the heating mode may operate in the injection mode. When the outdoor temperature exceeds the reference temperature, the heating mode may operate in the normal mode. In addition, the injection mode may include a gaseous injection mode and a two-phase injection mode.

When operating in the normal mode, the outdoor-unit controller 170 may close the injection valve 153. When the injection valve 153 is closed, all the refrigerant passing through the indoor heat exchanger 230 may pass through the main expansion valve 152 through the main pipe 101. The low-temperature low-pressure liquid refrigerant decompressed in the main expansion valve 152 may be phase-converted from the outdoor heat exchanger 130 to the gaseous refrigerant and flow into the flow passage switching valve 151.

When the air conditioner 1 operates in the injection mode, the outdoor-unit controller 170 opens the injection valve 153. When the injection valve 153 is opened, some of the refrigerant that has passed through the indoor heat exchanger 230 passes through the injection valve 153 and flows through the injection pipe 103, and the other part flows through the main pipe 101.

The high-pressure liquid refrigerant below the condensation temperature flowing through the injection pipe 103 may go down through the auxiliary heat exchanger 140, and the temperature decreases, while passing through the auxiliary heat exchanger 140 to exchange heat with the refrigerant flowing through the main pipe 101. In the auxiliary heat exchanger 140, a part of the liquid refrigerant may be converted into the gaseous refrigerant. Therefore, the refrigerant heat exchanged in the auxiliary heat exchanger 140 may exist in a state in which the liquid refrigerant and the gaseous refrigerant are mixed.

The refrigerant in which the liquid refrigerant and the gaseouss refrigerant are mixed may be injected into the injection port 123 of the compressor 120 through the injection pipe 103.

The refrigerant passing through the auxiliary heat exchanger 140 through the main pipe 101 may be depressurized at the main expansion valve 152 to become the low-temperature low-pressure two-phase refrigerant, and the outdoor heat exchanger 130 may evaporate the low-temperature low-pressure two-phase refrigerant into the gaseous refrigerant. During heating operation of the air conditioner, these steps are realized.

The gaseous refrigerant discharged from the outdoor heat exchanger 130 may flow into the third port 151c of the flow passage switching valve 151 (③), and the introduced gaseous refrigerant may flow into the inlet 112 of the accumulator 110 through the fourth port 151d (④).

The accumulator 110 may filter the liquid contained in the introduced refrigerant and discharge the low-temperature low-pressure gaseous refrigerant with the oil through the outlet 111 to supply it to the compressor 120.

The refrigerant supplied to the compressor 120 is compressed and discharged at the high-temperature high-pressure from the compressor 120. The air conditioner 1 operates in the heating mode through the circulation cycle in which the discharged refrigerant is supplied to the compressor 120 again through the above-described process.

As described above, the outdoor-unit controller 170 may determine whether to enter the injection mode based on the outdoor temperature transmitted from the sensors 160. In addition, after the injection mode is determined to be entered, the outdoor-unit controller 170 may prevent damage to the compressor 120 due to liquid compression by adjusting the dryness and the injection amount of the refrigerant injected into the compressor 120 to an optimal state through discharge super heat (DSH) control, and may perform an optimal injection mode. Hereinafter, the operation of performing the optimal injection mode through the DSH control of the outdoor-unit controller 170 will be described in detail.

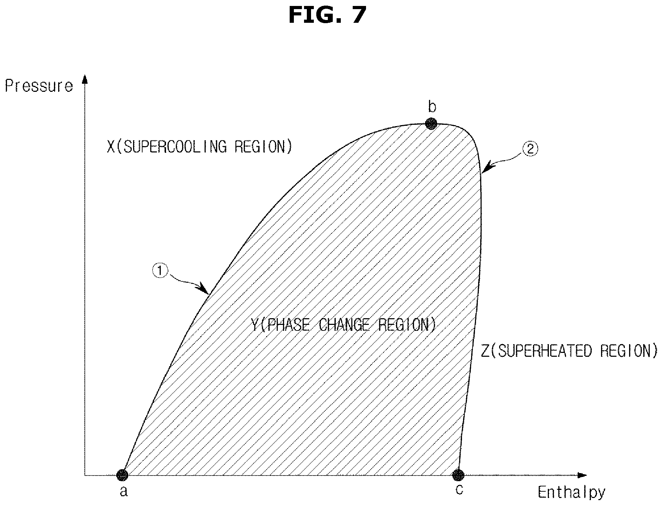

FIG. 7 is a graph illustrating a PH diagram (refrigerant diagram) representing a relationship between enthalpy and pressure.

A PH diagram may refer to a graph illustrating various thermodynamic properties related to refrigerants. The PH diagram may include information about isobaric lines, constant enthalpy lines, saturated liquid lines, saturated vapor lines, constant temperature lines, constant entropy lines, and constant dryness lines.

Referring to the PH diagram with reference to FIG. 7, in a refrigerant cycle, the refrigerant may have a total of three states according to changes in pressure. A left X region in FIG. 7 may refer to a region in which the refrigerant exists as a liquid in a supercooled state, and a middle Y region in FIG. 7 is a region in which the refrigerant phase changes from the liquid state to the gaseous state, that is, the region in which the refrigerant is mixed with the liquid state and the gaseous state. In addition, a right Z region in FIG. 7 refers to a region in which all of the refrigerant in the liquid state vaporizes and exists as the gaseous state.

In addition, a line ① connecting a and b in FIG. 7 may refer to a line separating the refrigerant in the liquid state from the refrigerant in the liquid and gaseous mixture. The line ① is called a saturated liquid line. Since the line ① is a line that separates the liquid state from the state in which the liquid state and the gaseous state are mixed, the refrigerant to start evaporation from the liquid state to the gaseous state is above the line ①.

Therefore, in a left region of the saturated liquid line, a supercooled liquid refrigerant having a temperature lower than that of the saturated liquid exists, and in a right region of the saturated liquid line is a mixture of the liquid refrigerant and the gaseous refrigerant evaporated in the liquid state. The state in which the refrigerant is mixed in the liquid state and gaseous state is called wet saturation vapor.

A line (2) connecting b and c in FIG. 7 may refer to a line that separates the state in which the refrigerant is mixed with the liquid state and the gaseous state and the state in which the refrigerant exists only in the gaseous state. The line (2) is called the saturated vapor line. The line (2) distinguishes the state in which the gaseous state and the gaseous state and the liquid state are mixed, so the refrigerant to start evaporation from the liquid state to the gaseous state is above the line (2).

Since the refrigerant existing above the line (2) may refer to the refrigerant in which evaporation is completely completed from the liquid, it is a dry saturation vapor state in which no liquid is present, and the temperature of the refrigerant is a saturation temperature like the liquid to be evaporated.

In the left region of the saturated vapor line, the liquid refrigerant and the gaseous refrigerant are mixed, and only the gaseous refrigerant exists in the right region of the saturated vapor line, and the gaseous refrigerant at this time may indicate a state of superheated vapor higher than the saturation temperature. That is, the gaseous refrigerant in the right region of the saturated vapor line has a higher temperature than the liquid evaporating under the same pressure.

In addition, the point b where the saturated liquid line and the saturated vapor line meet is called a critical point, and a pressure and a temperature at the critical point are called a critical pressure and a critical temperature. The critical temperature may refer to the highest temperature at which the refrigerant can condense. Therefore, the refrigerant is no longer condensed above the critical temperature.

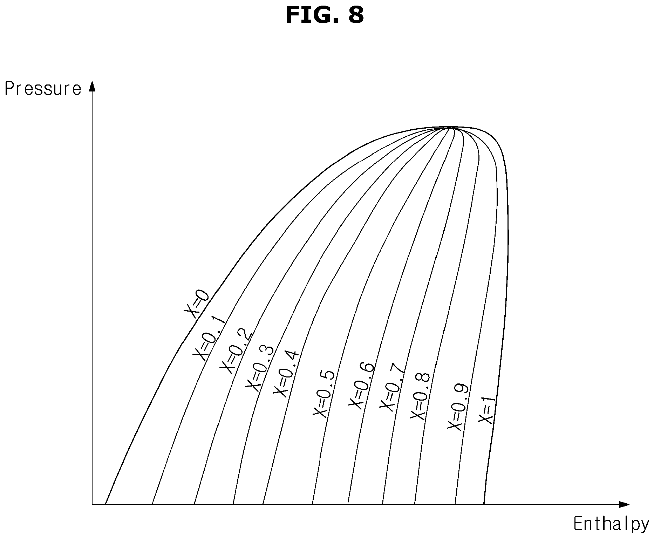

FIG. 8 is a view illustrating constant dryness lines in a PH diagram.

In the PH diagram, when the refrigerant is present in the Y region, that is, a mixture of the liquid refrigerant and the gaseous refrigerant in the PH diagram, the constant dryness line may refer to a line connecting the same a position where a ratio of the liquid refrigerant and the gaseous refrigerant is the same. In FIG. 8, nine constant dryness lines may be illustrated as an example.

In FIG. 8, X may represent a proportion of the gaseous state. Therefore, the refrigerant of the constant dryness line with X=0.1 has 10% of the gaseous refrigerant and 90% of the liquid refrigerant existing, and the refrigerant of the constant dryness line with X=0.7 has 70% of the gaseous refrigerant and 30% of the liquid refrigerant existing. Naturally, the refrigerant on the saturated liquid line has X being 0, so only the liquid refrigerant exists, and the refrigerant on the saturated vapor line X being 1, so only the gaseous refrigerant exists.

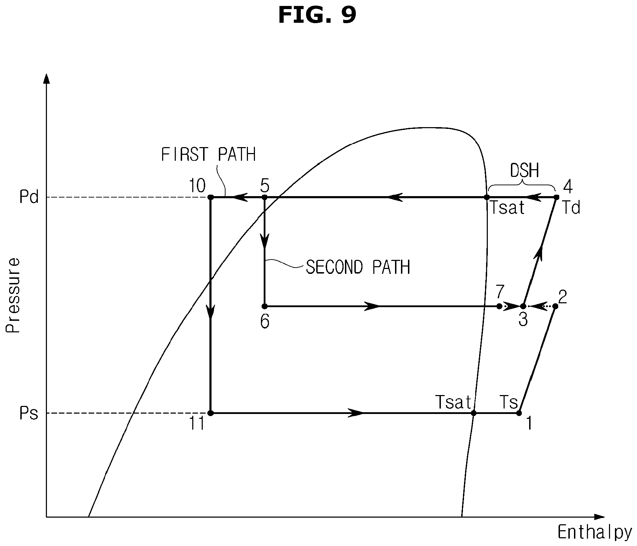

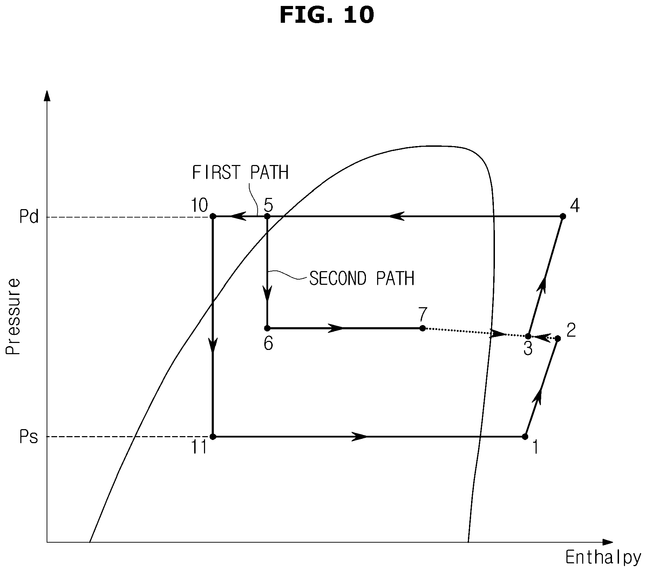

FIG. 9 is a graph illustrating a circulation process of a refrigerant in a PH diagram in an injection-type air conditioner for injecting a gaseous refrigerant, and FIG. 10 is a graph illustrating a circulation process of a refrigerant in a PH diagram in an air conditioner of a two-phase injection type in which a liquid refrigerant and a gaseous refrigerant are mixed.

Referring to FIGS. 9 and 10, the low-temperature low-pressure gaseous refrigerant (①) may be compressed into a high-temperature high-pressure gaseous refrigerant as it enters the compressor. During the compression process, the gaseous refrigerant or the two-phase refrigerant in the injection channel may be additionally injected into the compressor.

The refrigerant that has passed through the compressor may be converted into the refrigerant in a low-temperature and high-pressure liquid state as it enters the condenser (⑤), and the refrigerant converted into the liquid state may be divided into a first path to the evaporator and a second path to the injection valve.

The low-temperature high-pressure liquid refrigerant (⑩) directed to the evaporator along the first path may be converted into the two-phase refrigerant in which low-temperature low-pressure liquid and gaseous phases are mixed while passing through the main valve (⑪), and the refrigerant that has passed through the main valve may flow into the evaporator, and the refrigerant that has passed through the evaporator may be converted into the high-temperature high-pressure gaseous refrigerant (①).

On the other hand, the refrigerant flowing into the injection valve along the second path may change the state of the refrigerant while passing through the injection valve. In the case of a gas injection-type air conditioner that injects only the gaseous refrigerant, as illustrated in FIG. 9, after the refrigerant is converted into the two-phase refrigerant in which the liquid state and the gaseous state are mixed (⑥), it is converted back into the gaseous state and introduced into the compressor (⑦).

However, the air conditioner of the two-phase injection type injecting the two-phase refrigerant in which the liquid state and the gaseous state are mixed, as illustrated in FIG. 10, after the refrigerant may be converted into the two-phase in which the liquid state and the gaseous state are mixed (⑥). The two-phase refrigerant may flow into the compressor (⑦).

Therefore, the compressor of the two-phase injection-type air conditioner simultaneously compresses the refrigerant in the gaseous state introduced through the first path and the refrigerant in the two-phase mixture of the liquid state and the gaseous state introduced through the second path and converts the compressed refrigerant into the high-temperature high-pressure gaseous refrigerant.

In the case of the two-phase injection-type air conditioner that injects the mixture of the liquid refrigerant and the gaseous refrigerant as illustrated in FIG. 10, since the discharge temperature of the compressor may be reduced, there is an advantage of increasing the frequency of the compressor in a wider temperature condition.

However, in the case of the two-phase injection-type air conditioner, when the amount of the refrigerant flowing from the injection valve to the compressor increases, a problem of compressor damage due to liquid compression may occur inside the compressor, and when the frequency of the compressor is excessively increased to increase the heating efficiency, there is a problem that the refrigerant and the oil may be deteriorated.

Therefore, in the two-phase injection-type air conditioner, the present disclosure is to provide the air conditioner and the method of controlling the air conditioner, which can prevent the problem of compressor damage caused by liquid compression while increasing the heating efficiency. Hereinafter, a control method and an operating principle of the air conditioner according to the embodiment will be described with reference to the drawings.

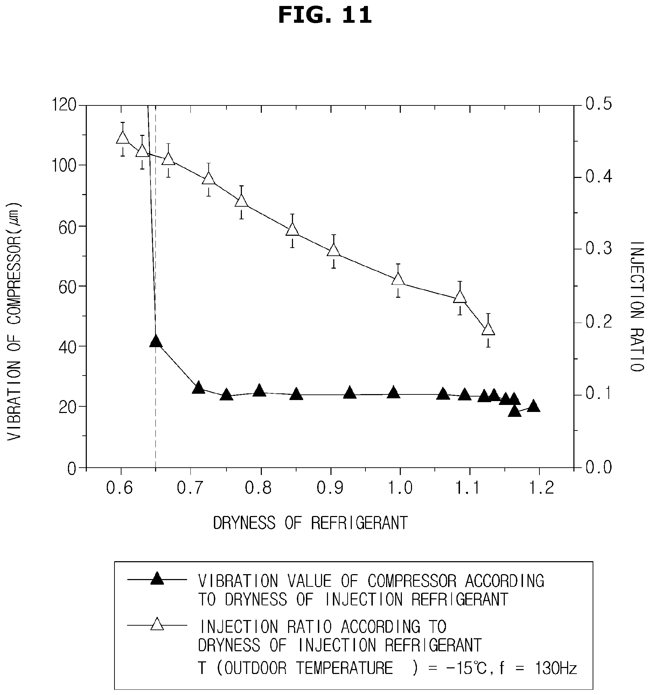

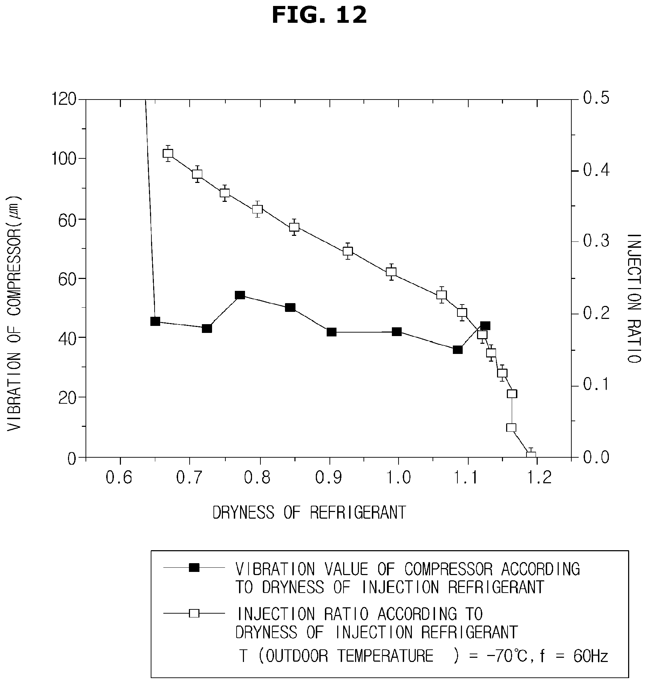

FIGS. 11 and 12 are views illustrating a relationship between vibration of a compressor and an injection ratio according to dryness of a refrigerant.

Particularly, FIG. 11 is a view illustrating the relationship between a vibration value of the compressor and an injection ratio when the outdoor temperature is -15 degrees and the frequency of the compressor is operating at 130 Hz. FIG. 12 is a view illustrating the relationship between the vibration value of the compressor and the injection ratio when the outdoor temperature is 7 degrees and the frequency of the compressor is operating at 60 Hz.

The dryness may refer to a mass ratio of saturated vapor in wet saturation vapor. The injection ratio may refer to the flow ratio of the flow path flowing into the main valve and the injection valve.

Referring to FIGS. 11 and 12, it can be seen that the vibration of the compressor increases rapidly when the dryness of the injected refrigerant becomes 0.65 or less. That is, when the dryness of the refrigerant flowing into the compressor is 0.65 or less, liquid compression occurs inside the compressor, which causes the problem that the compressor may be damaged. Therefore, in the case of the injection-type air conditioner, the problem of damage to the compressor may be prevented by maintaining the dryness of the refrigerant flowing into the compressor at 0.65 or above.

However, it is difficult to directly measure the dryness of the refrigerant flowing into the injection. Therefore, the air conditioner 1 according to the embodiment may calculate the relationship between the dryness of the refrigerant and the injection ratio, may measure the dryness of the refrigerant by indirectly measuring the dryness of the refrigerant based on the injection ratio, and may efficiently operate the air conditioner 1 by controlling the degree of opening of the injection valve based on this.

Looking at this in detail, it can be seen that, as illustrated in FIGS. 11 and 12, the dryness of the refrigerant and the injection ratio have a linear relationship. That is, when the injection ratio is 0.4, the dryness of the refrigerant becomes 0.65, so when the injection ratio is controlled to 0.4 or less, the dryness of the coolant may be controlled to 0.65 or above.

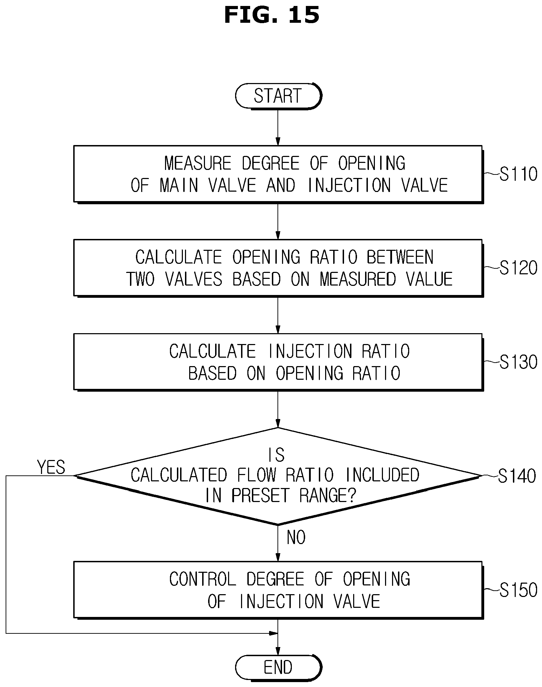

Accordingly, the air conditioner 1 according to the embodiment may calculate the opening ratio of the two valves 152 and 153 using various values associated with the main valve 152 and the injection valve 153, and may calculate the flow ratio of the injection valve 153 based on this. Particularly, the air conditioner 1 may determine whether the calculated flow ratio is included in a preset range. When not included in the preset range, the air conditioner 1 may control the degree of opening of at least one of the main valve 152 and the injection valve 153 to control the flow ratio to be included in the preset range. The control method will be described in detail in FIG. 15. Hereinafter, the method of calculating the flow ratio will be described in detail.

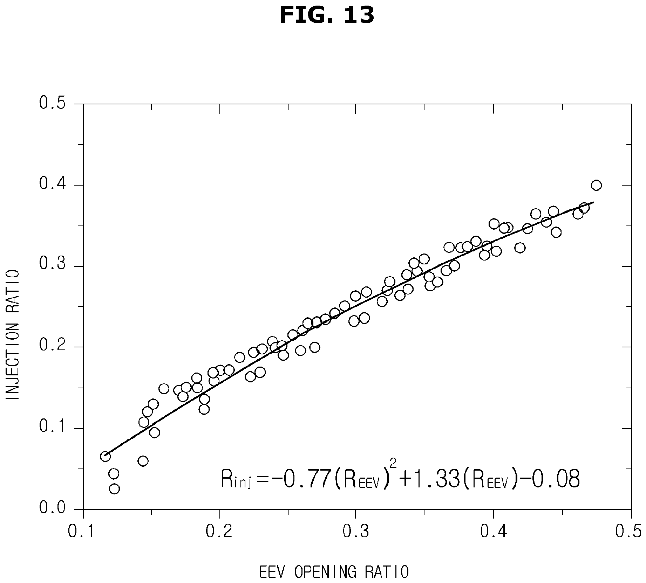

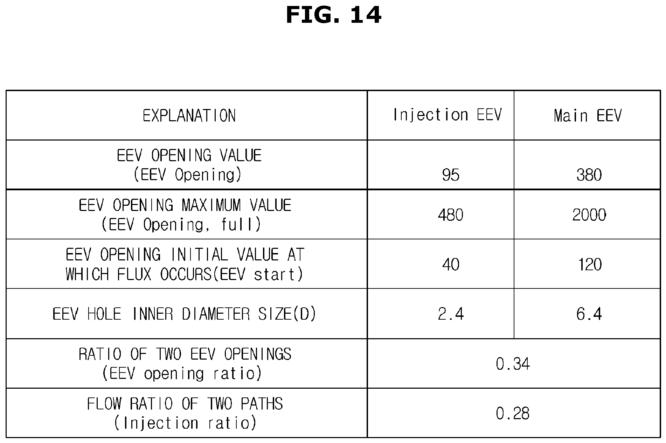

FIG. 13 is a graph illustrating a relationship between an injection ratio and an opening ratio of an electronic expansion valve, and FIG. 14 is a view illustrating equations and specific values required to calculate an injection ratio.

The values and equations illustrated in the graph of FIG. 13 are the results obtained through experiments, and the relationship between injection ratio Rinj and opening ratio Reev of the two valves 152 and 153 through the experiment may be deduced from Equation 1 below.

【Equation 1】

$$R_{inj} = -0.77\, R_{eev}{}^2 + 1.33\, R_{eev} - 0.08$$

Therefore, in order to calculate the injection ratio, it is necessary to calculate the opening ratio Reev of the two valves 152 and 153, and the opening ratio Reev of the two valves 152 and 153 may be expressed as in Equation 2 below.

【Equation 2】

$$R_{eev} = \frac{D_{e.inj}}{D_{e.suc}}$$

De.inj and De.suc may be expressed to calculate the injection ratio as Equation 3 below.

【Equation 3】

$$D_e = \left( \frac{EEV_{opening} - EEV_{start}}{EEV_{opening.full} - EEV_{start}} \right) D$$

Therefore, if the necessary values in Equation 3 are known, the injection ratio may be calculated through Equation 2 and Equation 1.

Hereinafter, the method of calculating the injection ratio based on the displayed values of FIG. 14 will be described. The values described below are numerical values described as an example for convenience of explanation, and are not limited thereto, and may be changed and set to various values according to usage conditions, and the values may be set by the user.

Referring to the items illustrated in the table of FIG. 14, an EEV Opening value may refer to an opening value of the currently detected valve, and the EEV Opening, full value may refer to a maximum value of the valve opening degree. In addition, an EEV Start value may refer to an initial value of the valve opening degree in which the flow occurs in the valve, and D may refer to an inner diameter size mm of a valve hole. The EEV opening ratio Reev may refer to an opening ratio of the main valve 152 and the injection valve 153, and the injection ratio may refer to a ratio of the amount of the refrigerant flowing into the main valve 152 flow path and the amount of the refrigerant flowing into the injection valve 153.

Among the values illustrated in the table of FIG. 14, the EEV opening value may refer to the opening values of the main valve 152 and the injection valve 153, which are detected in real time. Since other EEV opening maximum values, EEV initial values, and EEV hole inner diameter sizes are preset and produced according to the production method of the air conditioner, the set value may be applied. Therefore, if only the opening value of the valve is measured, the opening ratio and the injection ratio of the two valves 152 and 153 may be calculated using different values.

Referring to FIG. 14, the method of calculating the injection ratio, when the opening value of the detected injection valve 153 is 95, using Equation 3, De.inj = ((95-40) / (480 -40)) * 2.4 = 0.3. When the opening value of the detected main valve 152 is 380, De.inj = ((380-120) / (2000 -120)) * 6.4 = 0.89 may be obtained using Equation 3.

Equation 2 may be used to calculate the opening ratio of the injection valve 153 and the main valve 152 (Reev = (0.3)/(0.89) = 0.34). Through Equation 3, the flow ratio of the injection valve 153 and the main valve 152 may be calculated as Rinj = -0.77 * 0.34 * 0.34 + 1.33*0.34-0.08 = 0.28.

Therefore, when the opening values of the main valve 152 and the injection valve 153 are measured, the injection ratio may be calculated based on this and the operation of the air conditioner 1 is efficiently controlled by controlling the degree of opening of the injection valve 153 based on the calculated injection ratio. In the realization of this method, the control is based on a relationship between the injection ratio and the dryness of the injected refrigerant. Hereinafter, an operation control method of the air conditioner 1 will be described with reference to the drawings.

FIG. 15 is a flowchart illustrating a method of controlling an air conditioner according to an embodiment.

Referring to FIG. 15, the air conditioner 1 may measure the degree of opening of the main valve 152 and the injection valve 153 (S 110).

When the degree of opening of the two valves 152 and 153 is measured, the opening ratio Reev between the two valves 152 and 153 may be calculated based on the measured value (S120), and the flow ratio between the main valve 152 and the injection valve 153 may be calculated based on the calculated opening ratio (S130).

The method of calculating the opening ratio and the flow ratio (S130) was described in detail in FIG. 14 and will be omitted.

When the flow ratio is calculated, it may be determined whether the calculated flow ratio is included in the preset range (S140).

The preset range may be a range in which liquid compression does not occur in the compressor 120, and particularly, refer to a range in which the injection ratio does not exceed a limit value. In addition, the limit value may include a range in which the flow ratio is 0.35 to 0.45. That is, when the flow ratio does not exceed 0.35 to 0.45, it can be considered that it is included in the preset range.

In addition, the preset range is not limited to the above-described values, and the preset range may be variously set according to the operating environment and conditions of the air conditioner 1.

When the calculated flow ratio is included in the preset range, since the air conditioner 1 is operating efficiently, it may be terminated without taking special measures. However, when the calculated injection ratio is not included in the preset range, since the compressor may be damaged due to liquid compression, the degree of opening of the injection valve 153 may be controlled to control the amount of the refrigerant flowing into the compressor. Particularly, the degree of opening of the injection valve 153 may be reduced to reduce the flow ratio (S150).

Therefore, the air conditioner 1 according to the embodiment has the advantage of preventing damage to the compressor 120 due to liquid compression through the method and simultaneously increasing the amount of the refrigerant flowing into the compressor 120 to efficiently operate the air conditioner 1. In addition, according to the degree of opening of the injection valve 153 to be changed, the risk of liquid compression may be determined in advance and countermeasures may be taken in advance, thereby providing a more reliable air conditioner 1.

In addition, in the case of a conventional injection-type air conditioner, there was a disadvantage in that the efficiency was not good by applying a uniformly small size of the injection valve in order to prevent the compressor from being damaged by liquid compression. The air conditioner 1 has the advantage of securing stability even when the injection valve having a size of various ranges is employed.

The air conditioner 1 and the control method thereof according to the embodiment have been described through the drawings.

Although the embodiments have been described by the limited embodiments and the drawings thus far, those skilled in the art can make various modifications and variations from the above description. For example, appropriate results can be achieved even if the described techniques are performed in a different order than the described method, and/or the components of the described system, structure, device, circuit, etc. are combined in a different form from the described method or replaced by other components or equivalents.

The present invention is defined by the appended independent claims.

**Claims**

1. An air conditioner comprising:

   a compressor (120) configured to compress a refrigerant;
   an indoor heat exchanger (230) configured to convert a gaseous refrigerant into a liquid refrigerant in a heating mode;
   an outdoor heat exchanger (130) configured to convert the liquid refrigerant into the gaseous refrigerant in the heating mode;
   a main pipe (101) connecting the indoor heat exchanger (230) and the outdoor heat exchanger (130);
   an injection pipe (103) branched from the main pipe (101) and connected to an injection port (123) of the compressor (120);
   a main valve (152) installed on the main pipe (101) and configured to control flow rate of the refrigerant flowing into the main pipe (101);
   an injection valve (153) installed on the injection pipe (103) and configured to control the flow rate of the refrigerant flowing into the injection pipe (103); and
   a controller configured to calculate an injection ratio based on a degree of opening of the injection valve (153) and the main valve (152), and to control the degree of opening of the injection valve (153) when the calculated injection ratio is not included in a preset range,
   wherein the controller is configured to control the degree of opening of the injection valve (153) based on a relationship between the injection ratio and dryness of the refrigerant flowing through the injection port (123) into the compressor (120).

2. The air conditioner according to claim 1, wherein the controller is configured to control the degree of opening of the injection valve (153) such that the injection ratio is included in the preset range.

3. The air conditioner according to claim 1, wherein the controller is configured to reduce the degree of opening of the injection valve (153) when the injection ratio is not included in the preset range.

4. The air conditioner according to claim 1, wherein the injection ratio is a flow ratio of a flow path flowing into the main valve (152) and a flow path into the injection valve (153),

   the preset range does not exceed a limit value, the limit value comprises a range of 0.35 to 0.45.

5. The air conditioner according to claim 1, wherein the controller is configured to calculate an opening ratio of the injection valve and the main valve based on the degree of opening of the injection valve and the main valve.

6. The air conditioner according to claim 5, wherein the controller is configured to calculate the opening ratio of the injection valve (153) and the main valve (152) based on a maximum value of an opening degree of each of the main valve and the injection valve, an inner diameter size of each of the main and injection valve holes, and an initial value of the opening degree of each of the main valve and the injection valve at which the flow rate occurs in each of the main valve and the injection valve.

7. The air conditioner according to claim 5, wherein the controller is configured to calculate the injection ratio based on the opening ratio of the injection valve (153) and the main valve (152).

8. The air conditioner according to claim 1, wherein the compressor (120) is configured to compress refrigerant mixed from liquid refrigerant and gaseous refrigerant flowing from the injection valve (153) and gaseous refrigerant flowing from the main valve.

9. A method of controlling an air conditioner including a compressor (120), an indoor heat exchanger (230), and an outdoor heat exchanger (130), a main pipe (101) connecting the indoor heat exchanger and the outdoor heat exchanger, and an injection pipe (103) branched from the main pipe and connecting to an injection port of the compressor (120), the method comprising:

   calculating an injection ratio based on a degree of opening of a main valve (152) installed on the main pipe and a degree of opening of an injection valve (153) installed on the injection pipe; and
   controlling the degree of opening of the injection valve (153) when the calculated injection ratio is not included in a preset range,
   , wherein the controlling of the degree of opening of the injection valve comprises:
   controlling the degree of opening of the injection valve based on a relationship between the injection ratio and dryness of the refrigerant flowing through the injection port (123) into the compressor (120)..

10. The method according to claim 9, wherein the controlling of the degree of opening of the injection valve comprises:

controlling the degree of opening of the injection valve so that the injection ratio is included in the preset range.

11. The method according to claim 9, wherein the controlling of the degree of opening of the injection valve comprises:

reducing the degree of opening of the injection valve when the injection ratio is not included in the preset range.

12. The method according to claim 9, wherein the injection ratio is a flow ratio of a flow path flowing into the main valve and a flow path into the injection valve,

the preset range cannot exceed a limit value, and

the limit value comprises a range of 0.35 to 0.45.

13. The method according to claim 9, wherein the controlling of the degree of opening of the injection valve comprises:

calculating an opening ratio of the injection valve and the main valve based on the degree of opening of the injection valve and the main valve.

**Patentansprüche**

1. Klimaanlage, umfassend:

einen Kompressor (120), der so konfiguriert ist, dass er ein Kältemittel verdichtet;
einen Innenraum-Wärmetauscher (230), der so konfiguriert ist, dass er in einem Heizmodus ein gasförmiges Kältemittel in ein flüssiges Kältemittel umwandelt;
einen Außenwärmetauscher (130), der so konfiguriert ist, dass er im Heizmodus das flüssige Kältemittel in das gasförmige Kältemittel umwandelt;
ein Hauptrohr (101), das den Innenraum-Wärmetauscher (230) und den Außenwärmetauscher (130) verbindet;
ein Einspritzrohr (103), das vom Hauptrohr (101) abzweigt und mit einer Einspritzöffnung (123) des Kompressors (120) verbunden ist;
ein Hauptventil (152), das im Hauptrohr (101) installiert und so konfiguriert ist, dass es eine Durchflussrate des in das Hauptrohr (101) strömenden Kältemittels steuert;
ein Einspritzventil (153), das am Einspritzrohr (103) installiert und so konfiguriert ist, dass es die Durchflussrate des in das Einspritzrohr (103) strömenden Kältemittels steuert; und
eine Steuerung, die so konfiguriert ist, dass sie ein Einspritzverhältnis auf der Grundlage eines Öffnungsgrads des Einspritzventils (153) und des Hauptventils (152) berechnet und den Öffnungsgrad des Einspritzventils (153) steuert, wenn das berechnete Einspritzverhältnis nicht in einem voreingestellten Bereich liegt,
wobei die Steuerung so konfiguriert ist, dass sie den Öffnungsgrad des Einspritzventils (153) auf der Grundlage einer Beziehung zwischen dem Einspritzverhältnis und dem Trockenheitsgrad des durch die Einspritzöffnung (123) in den Kompressor (120) strömenden Kältemittels steuert.

2. Klimaanlage nach Anspruch 1, wobei die Steuerung so konfiguriert ist, dass sie den Öffnungsgrad des Einspritzventils (153) so steuert, dass das Einspritzverhältnis in dem voreingestellten Bereich enthalten ist.

3. Klimaanlage nach Anspruch 1, wobei die Steuerung so konfiguriert ist, dass sie den Öffnungsgrad des Einspritzventils (153) verringert, wenn das Einspritzverhältnis nicht in dem voreingestellten Bereich liegt.

4. Klimaanlage nach Anspruch 1, wobei das Einspritzverhältnis ein Durchflussverhältnis eines in das Hauptventil (152) fließenden Durchflussweges und eines in das Einspritzventil (153) fließenden Durchflussweges ist,

der voreingestellte Bereich einen Grenzwert nicht überschreitet,
der Grenzwert einen Bereich von 0,35 bis 0,45 umfasst.

5. Klimaanlage nach Anspruch 1, wobei die Steuerung so konfiguriert ist, dass sie ein Öffnungsverhältnis des Einspritzventils und des Hauptventils auf der Grundlage des Öffnungsgrads des Einspritzventils und des Hauptventils berechnet.

6. Klimaanlage nach Anspruch 5, wobei die Steuerung so konfiguriert ist, dass sie das Öffnungsverhältnis des Einspritzventils (153) und des Hauptventils (152) auf der Grundlage eines Maximalwerts eines Öffnungsgrads sowohl des Hauptventils als auch des Einspritzventils, einer Innendurchmessergröße sowohl des Haupt- als auch des Einspritzventillochs und eines Anfangswerts des Öffnungsgrads sowohl des Hauptventils als auch des Einspritzventils berechnet, bei dem die Durchflussrate sowohl im Hauptventil als auch im Einspritzventil auftritt.

7. Klimaanlage nach Anspruch 5, wobei die Steuerung so konfiguriert ist, dass sie das Einspritzverhältnis auf der Grundlage des Öffnungsverhältnisses des Einspritzventils (153) und des Hauptventils (152) berechnet.

**8.** Klimaanlage nach Anspruch 1, wobei der Kompressor (120) so konfiguriert ist, dass er ein Kältemittel, das aus flüssigem Kältemittel und gasförmigem Kältemittel gemischt wird, das aus dem Einspritzventil (153) strömt, und gasförmigem Kältemittel, das aus dem Hauptventil strömt, verdichtet.

**9.** Verfahren zum Steuern einer Klimaanlage, die einen Kompressor (120), einem Innenraum-Wärmetauscher (230) und einem Außenwärmetauscher (130), ein Hauptrohr (101), das den Innenraum-Wärmetauscher und den Außenwärmetauscher verbindet, und ein Einspritzrohr (103), das von dem Hauptrohr abzweigt und mit einer Einspritzöffnung des Kompressors (120) verbunden ist, umfasst, wobei das Verfahren umfasst:

Berechnen eines Einspritzverhältnisses auf der Grundlage eines Öffnungsgrads eines am Hauptrohr installierten Hauptventils (152) und eines Öffnungsgrads eines am Einspritzrohr installierten Einspritzventils (153); und
Steuern des Öffnungsgrades des Einspritzventils (153), wenn das berechnete Einspritzverhältnis nicht in einem voreingestellten Bereich liegt,
wobei das Steuern des Öffnungsgrads des Einspritzventils umfasst:

Steuern des Öffnungsgrads des Einspritzventils auf der Grundlage einer Beziehung zwischen dem Einspritzverhältnis und dem Trockenheitsgrad des durch die Einspritzöffnung (123) in den Kompressor (120) strömenden Kältemittels.

**10.** Verfahren nach Anspruch 9, wobei das Steuern des Öffnungsgrades des Einspritzventils umfasst:
Steuern des Öffnungsgrads des Einspritzventils derart, dass das Einspritzverhältnis im voreingestellten Bereich enthalten ist.

**11.** Verfahren nach Anspruch 9, wobei das Steuern des Öffnungsgrades des Einspritzventils umfasst:
Verringern des Öffnungsgrads des Einspritzventils, wenn das Einspritzverhältnis nicht im voreingestellten Bereich liegt.

**12.** Verfahren nach Anspruch 9, wobei das Einspritzverhältnis ein Durchflussverhältnis zwischen einem in das Hauptventil fließenden Durchflussweg und einem in das Einspritzventil fließenden Durchflussweg ist,

wobei der voreingestellte Bereich kann einen Grenzwert nicht überschreiten, und
der Grenzwert einen Bereich von 0,35 bis 0,45 umfasst.

**13.** Verfahren nach Anspruch 9, wobei das Steuern des Öffnungsgrades des Einspritzventils umfasst:
Berechnen eines Öffnungsverhältnisses des Einspritzventils und des Hauptventils auf der Grundlage des Öffnungsgrades des Einspritzventils und des Hauptventils.

## Revendications

**1.** Climatiseur, comprenant

un compresseur (120) configuré pour comprimer un réfrigérant ;
un échangeur de chaleur intérieur (230) configuré pour convertir un réfrigérant gazeux en un réfrigérant liquide en mode chauffage ;
un échangeur de chaleur extérieur (130) configuré pour convertir le réfrigérant liquide en réfrigérant gazeux en mode chauffage ;
un tuyau principal (101) reliant l'échangeur de chaleur intérieur (230) et l'échangeur de chaleur extérieur (130) ;
un tuyau d'injection (103) dérivé du tuyau principal (101) et relié à un orifice d'injection (123) du compresseur (120) ;
une vanne principale (152) installée sur le tuyau principal (101) et configurée pour commander le débit du réfrigérant s'écoulant dans le tuyau principal (101) ;
une vanne d'injection (153) installée sur le tuyau d'injection (103) et configurée pour commander le débit du réfrigérant s'écoulant dans le tuyau d'injection (103) ; et
une commande configurée pour calculer un rapport d'injection sur la base d'un degré d'ouverture de la vanne d'injection (153) et de la vanne principale (152), et pour commander le degré d'ouverture de la vanne d'injection (153) lorsque le rapport d'injection calculé n'est pas compris dans une plage prédéfinie,
la commande étant configurée pour commander le degré d'ouverture de la vanne d'injection (153) en fonction d'une relation entre le taux d'injection et la siccité du réfrigérant qui s'écoule par l'orifice d'injection (123) dans le compresseur (120).

**2.** Climatiseur selon la revendication 1, dans lequel la commande est configurée pour commander le degré d'ouverture de la vanne d'injection (153) de manière à ce que le rapport d'injection soit compris dans la plage prédéfinie.

**3.** Climatiseur selon la revendication 1, dans lequel la commande est configurée pour réduire le degré d'ouverture de la vanne d'injection (153) lorsque le rapport d'injection n'est pas compris dans la plage prédéfinie.

4. Climatiseur selon la revendication 1, dans lequel le rapport d'injection est un rapport de débit entre une voie d'écoulement s'écoulant dans la vanne principale (152) et une voie d'écoulement s'écoulant dans la vanne d'injection (153),

> la plage prédéfinie ne dépasse pas une valeur limite,
> la valeur limite est comprise dans la plage entre 0,35 et 0,45.

5. Climatiseur selon la revendication 1, dans lequel la commande est configurée pour calculer un rapport d'ouverture de la vanne d'injection et de la vanne principale en fonction du degré d'ouverture de la vanne d'injection et de la valve principale.

6. Climatiseur selon la revendication 5, dans lequel la commande est configurée pour calculer le rapport d'ouverture de la vanne d'injection (153) et de la vanne principale (152) sur la base d'une valeur maximale d'un degré d'ouverture de la vanne principale et de la vanne d'injection, d'un diamètre intérieur de chacun des trous de la vanne principale et de la vanne d'injection, et d'une valeur initiale du degré d'ouverture de la vanne principale et de la vanne d'injection à laquelle le débit se produit dans la vanne principale et dans la vanne d'injection.

7. Climatiseur selon la revendication 5, dans lequel la commande est configurée pour calculer le rapport d'injection sur la base du rapport d'ouverture de la vanne d'injection (153) et de la vanne principale (152).

8. Climatiseur selon la revendication 1, dans lequel le compresseur (120) est configuré pour comprimer le réfrigérant mélangé à partir du réfrigérant liquide et du réfrigérant gazeux s'écoulant de la vanne d'injection (153) et du réfrigérant gazeux s'écoulant de la vanne principale.

9. Procédé de commande d'un climatiseur comprenant un compresseur (120), un échangeur de chaleur intérieur (230) et un échangeur de chaleur extérieur (130), un tuyau principal (101) reliant l'échangeur de chaleur intérieur et l'échangeur de chaleur extérieur, et un tuyau d'injection (103) dérivé du tuyau principal et relié à un orifice d'injection du compresseur (120), le procédé comprenant :

> calculer un rapport d'injection basé sur le degré d'ouverture d'une vanne principale (152) installée sur le tuyau principal et le degré d'ouverture d'une vanne d'injection (153) installée sur le tuyau d'injection ; et
commander le degré d'ouverture de la vanne d'injection (153) lorsque le rapport d'injection calculé n'est pas compris dans une plage prédéfinie,
la commande du degré d'ouverture de la vanne d'injection comprenant :
commander le degré d'ouverture de la vanne d'injection sur la base d'une relation entre le taux d'injection et la siccité du réfrigérant circulant à travers l'orifice d'injection (123) dans le compresseur (120)..

10. Procédé selon la revendication 9, dans lequel la commande du degré d'ouverture de la vanne d'injection comprend :
commander le degré d'ouverture de la vanne d'injection de manière à ce que le rapport d'injection soit compris dans la plage prédéfinie.

11. Procédé selon la revendication 9, dans lequel la commande du degré d'ouverture de la vanne d'injection comprend :
réduire le degré d'ouverture de la vanne d'injection lorsque le rapport d'injection n'est pas compris dans la plage prédéfinie.

12. Procédé selon la revendication 9, dans lequel le rapport d'injection est un rapport de débit entre une voie d'écoulement s'écoulant dans la vanne principale et une voie d'écoulement s'écoulant dans la vanne d'injection,

> la plage prédéfinie ne peut pas dépasser une valeur limite, et
> la valeur limite est comprise entre 0,35 et 0,45.

13. Procédé selon la revendication 9, dans lequel la commande du degré d'ouverture de la vanne d'injection comprend :
calculer un rapport d'ouverture de la vanne d'injection et de la vanne principale en fonction du degré d'ouverture de la vanne d'injection et de la vanne principale.

# FIG. 1

# FIG. 2

# FIG. 3

# FIG. 4

# FIG. 5

# FIG. 6

# FIG. 7

# FIG. 8

Pressure

X=0
X=0.1
X=0.2
X=0.3
X=0.4
X=0.5
X=0.6
X=0.7
X=0.8
X=0.9
X=1

Enthalpy

# FIG. 9

# FIG. 10

## FIG. 11

VIBRATION VALUE OF COMPRESSOR ACCORDING TO DRYNESS OF INJECTION REFRIGERANT

INJECTION RATIO ACCORDING TO DRYNESS OF INJECTION REFRIGERANT
T (OUTDOOR TEMPERATURE ) = −15℃, f = 130Hz

## FIG. 12

VIBRATION OF COMPRESSOR($\mu$m)

INJECTION RATIO

DRYNESS OF REFRIGERANT

■ —— VIBRATION VALUE OF COMPRESSOR ACCORDING
TO DRYNESS OF INJECTION REFRIGERANT

□ —— INJECTION RATIO ACCORDING TO
DRYNESS OF INJECTION REFRIGERANT
T (OUTDOOR TEMPERATURE ) = -70℃, f = 60Hz

**FIG. 13**

$R_{inj} = -0.77(R_{EEV})^2 + 1.33(R_{EEV}) - 0.08$

# FIG. 14

| EXPLANATION | Injection EEV | Main EEV |
|---|---|---|
| EEV OPENING VALUE<br>(EEV Opening) | 95 | 380 |
| EEV OPENING MAXIMUM VALUE<br>(EEV Opening, full) | 480 | 2000 |
| EEV OPENING INITIAL VALUE AT<br>WHICH FLUX OCCURS(EEV start) | 40 | 120 |
| EEV HOLE INNER DIAMETER SIZE(D) | 2.4 | 6.4 |
| RATIO OF TWO EEV OPENINGS<br>(EEV opening ratio) | 0.34 | |
| FLOW RATIO OF TWO PATHS<br>(Injection ratio) | 0.28 | |

# FIG. 15

```
                          START

                  MEASURE DEGREE OF OPENING
                OF MAIN VALVE AND INJECTION VALVE        S110

                 CALCULATE OPENING RATIO BETWEEN
                TWO VALVES BASED ON MEASURED VALUE       S120

                   CALCULATE INJECTION RATIO
                    BASED ON OPENING RATIO               S130

                            IS
   YES          CALCULATED FLOW RATIO INCLUDED           S140
                       IN PRESET RANGE?

                           NO

                  CONTROL DEGREE OF OPENING
                     OF INJECTION VALVE                  S150

                           END
```

**EP 3 726 164 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3002532 A1
- GB 2547144 A